# EUROPÄISCHE PATENTSCHRIFT

(11) **EP 1 988 115 B1**
(45) Veröffentlichungstag und Bekanntmachung des Hinweises auf die Patenterteilung: **13.01.2010**
(21) Anmeldenummer: 08154914.9
(22) Anmeldetag: 22.04.2008
(51) Int. Cl.: C08G 77/26, C08G 77/06, C07F 7/18, C08G 77/388

(54) **Verfahren zur kontinuierlichen Herstellung von Aminoalkylgruppen aufweisenden Organopolysiloxanen**
Process for the continuous preparation of organopolysiloxanes having aminoalkyl groups
Procédé continu de fabrication de polyorganosiloxanes portant des fonctions aminoalkyles

(30) Priorität: 02.05.2007 DE 102007020568
(43) Veröffentlichungstag der Anmeldung: 05.11.2008
(73) Patentinhaber: Wacker Chemie AG, 81737 München (DE)
(72) Erfinder: Schildbach, Daniel, 84524 Neuötting (DE); Bindl, Johann, 84489 Burghausen (DE); Geisberger, Gilbert, 84503 Altötting (DE)
(74) Vertreter: Deffner-Lehner, Maria

(56) Entgegenhaltungen:
- EP-A- 0 950 680
- EP-A- 1 175 937
- EP-A- 1 580 215
- US-A- 5 456 888
- US-A1- 2005 119 434

## Beschreibung

Die Erfindung betrifft ein Verfahren zur Herstellung von Aminoalkylgruppen aufweisenden Organopolysiloxanen.

Aminoalkylgruppen tragende Organopolysiloxanöle, im Folgenden als Aminöle bezeichnet, zählen zu den bedeutendsten organisch funktionalisierten Organopolysiloxanen und werden in vielen verschiedenen Anwendungsbereichen erfolgreich eingesetzt. Dazu zählen u. a. die Textilausrüstung, der Bautenschutz, kosmetische Formulierungen oder die Behandlung von Oberflächen. Bei den meisten Anwendungen in diesen Gebieten kommt es darauf an, Aminöle einzusetzen, die eine hohe Qualität aufweisen. Zu den entsprechenden Qualitätsmerkmalen zählen a) eine konstante und möglichst niedrige Restflüchtigkeit (z. B. hervorgerufen durch kurzkettige Alkohole, kurzkettige und/oder cyclische Siloxankomponenten oder Amine), b) eine konstante Viskosität, c) eine optimale statistische Verteilung der Aminoalkylgruppen im Copolymer, und, wo möglich und nötig, d) optische Klarheit (Trübungsfreiheit). Vor allem die Qualitätsmerkmale b) und c) lassen sich meist nur durch eine effektive Equilibrierung der Polymermischung erreichen, ggf. gekoppelt an eine Kondensationsreaktion, wobei jedoch in Abhängigkeit der eingestellten Reaktionsbedingungen unterschiedliche Mengen an flüchtigen Verbindungen anfallen.

Aminöle werden meist durch Kondensations- und/oder Equilibrierungsreaktionen zwischen linearen oder cyclischen Organopolysiloxanen und aminoalkylfunktionalisierten Alkoxysilanen bzw. deren Teil- oder Vollhydrolysaten hergstellt, meist unter Einwirkung katalytischer Mengen an basischen anorganischen oder organischen Verbindungen. Nach dem gängigen Stand der Technik werden Aminöle im so genannten Batch-Verfahren, also kampagnenweise in diskontinuierlichen Rührwerksprozessen, hergestellt. Rührwerke sind durch die Vielfalt der in ihnen durchführbaren chemischen Reaktionen sehr flexibel, werden allerdings - verglichen mit kontinuierlichen Verfahren - bei sehr großen Produktionskampagnen und hohen Massendurchsätzen unwirtschaftlich. Das liegt vor allem daran, dass sie sich nur bis zu einem gewissen Grad automatisieren lassen und dass man lange Zeiten zum Aufheizen und Abkühlen sowie zum Befüllen und Entleeren der mehrere Kubikmeter großen Behälter in Kauf nehmen muss (hoher Betriebsaufwand, hohe Arbeitskosten). Zusätzlich müssen Standzeiten des Reaktionsproduktes in Kauf genommen werden, in denen z. B. die Qualitätsprüfung des erzeugten Materials durchgeführt wird. Vor allem jedoch ergeben sich durch die verschiedenen Produktionskampagnen zwangsläufig Schwankungen in der Produktzusammensetzung und -qualität, wodurch Produktspezifikationen weiter gefasst werden müssen und hohe Qualitäten schwerer erreicht werden können. Nicht zuletzt nimmt ein Rührwerk im Vergleich zu einer kontinuierlich betriebenen Anlage wesentlich mehr Raum in Anspruch und lässt sich nur durch sehr großen technischen Aufwand bzw. gar nicht im Durchsatz erhöhen ("Upscaling", "Debottlenecking").

Eine Schwierigkeit gängiger Aminölsynthesen ist die Deaktivierung des verwendeten Kondensations- bzw. Equilibrierungskatalysators. Wird der basische Katalysator auf herkömmliche Weise mit einer Säure neutralisiert, wie z. B. in US 5,077,421 beschrieben, kommt es durch Salzausfällungen zu Trübungen. Jedoch ist eine kontinuierliche oder semikontinuierliche Filtration eines kontinuierlich erzeugten Aminöls nicht erwünscht, da sich dadurch technische Schwierigkeiten ergeben (z. B. Filterwechsel im kontinuierlichen Betrieb) und sich die Raum-Zeit-Ausbeute verringert.

Eine Möglichkeit, solche Trübungen zu vermeiden, ist das Verfahren, die verwendeten Tetraalkyl-ammoniumhydroxide bzw. Ammoniumphosphate und -borate nach beendeter Reaktion durch thermische Zersetzung zu deaktivieren, wie es z. B. in US 4,652,662 (korrespondierende DE-A 3418358) beschrieben ist. Die dabei anfallenden Zersetzungsprodukte müssen jedoch im Vakuum destillativ entfernt werden. Dem Fachmann ist bekannt, dass dies einen mehrstündigen und zudem energieaufwändigen Prozessabschnitt.darstellen kann, der aufgrund des daraus resultierenden Verweilzeitproblems nicht ohne weiteres kontinuierlich durchgeführt werden kann und außerdem durch Spuren von flüchtigen organischen Aminen meist zu einer inakzeptablen Geruchsbelästigung beim Einsatz der hergestellten Aminöle führt.

US 7,129,369 (korrespondierende EP-A 1580215) beschreibt ein Verfahren, bei dem trotz der Verwendung von Alkalimetallhydroxiden und -alkoholaten ohne Filtrationsschritt trübungsfreie Aminöle erhalten werden, indem mit Silylphosphaten neutralisiert wird, wodurch siliconlösliche Neutralisationsprodukte erhalten werden.

EP 950 680 A1 offenbart ein kontinuierliches Verfahren für polymeranaloge Umsetzungen, insbesondere für Hydrosilylierungen, bei der SiH-Gruppen aufweisende Organopolysiloxane mit endständige Doppelbindungen aufweisenden organischen Verbindungen, wie Allylalkohol, umgesetzt werden. Hierbei findet keine Equilibierungs- oder Kondensationsreaktion zur Herstellung von Polymeren statt, sondern die eingesetzten Polymere werden lediglich funktionalisiert.

US 4,128,568 (korrespondierende DE-A 2705563) beschreibt ein kontinuierliches Verfahren zur Herstellung von unfunktionalisierten Organopolysiloxanen. Die verwendeten Alkalimetallhydroxide müssen durch Zusatz von Trimethylchlorsilan deaktiviert werden. Die so erhaltenen Organopolysiloxane müssen also einem nachgeschalteten Filtrations- und Destillationsschritt unterworfen werden, um die durch die Desaktivierung erzeugten flüchtigen Disiloxane zu entfernen und so die gewünschte niedrige Restflüchtigkeit zu erreichen.

EP-A 1723193 beschreibt ein katalysatorfreies kontinuierliches Verfahren zur kontinuierlichen Herstellung von endständig aminoalkylfunktionellen Siloxanen aus endständig SiOH-Gruppen tragenden Siloxanen und cyclischen Silazanen. Das Verfahren geht jedoch mit cyclischen Silazanen von einer speziellen und aufwändigen Aminvorstufe aus, u. a. mit dem Ziel, das erhaltene Aminöl frei von aus Kondensationsreaktionen resultierenden flüchtigen Alkoholen zu halten. Darüber hinaus sind die SiOH-Gruppen tragenden Siloxane, die für seitenständige nach diesem Verfahren erzeugte Aminöle notwendig sind, nicht leicht und ohne Weiteres zugänglich.

Kontinuierliche Verfahren, wie z. B. in US 3,853,934 beschrieben, bei denen die zu kondensierenden Organopolysiloxanbausteine über einen sauren silicatischen Festbettkatalysator geleitet werden, scheiden zur Herstellung von Aminölen aus, da die Amingruppen mit den Säuregruppen spontan Salze bilden und den Katalysator deaktivieren würden.

EP-A 0982347 beschreibt ein kontinuierliches Verfahren zur Herstellung von Siliconpolymeren aus SiOH-Gruppen tragenden Siloxanen oder Siloxancyclen mittels katalytischer Mengen an basischen Phosphazenen. Außer einer Endgruppenfunktionalisierung mit verschiedenen SiC-gebundenen Kohlenwasserstoffresten werden jedoch keine heteroatomsubstituierten organisch funktionalisierten Copolymere, wie etwa Aminöle, beschrieben.

Ein sehr spezieller kontinuierlicher Reaktor zur Herstellung von Siloxanpolymeren aus Siloxanmono- und oligomeren wird in EP-A 0522776 beschrieben. Die Reaktionsmischung wird dabei aufgeschäumt und tritt durch eine poröse Wand in den Reaktionsraum. Durch die hohe erzeugte Grenzfläche zwischen Reaktionsmischung und Gasraum können Flüchtigkeiten aus dünnflüssigen Medien gut entfernt werden. Das beschriebene Verfahren ist jedoch auf Kondensationsreaktionen von Monomeren oder dünnflüssigen Oligomeren beschränkt, eine ausdrückliche Equilibrierung der erzeugten Polymere oder die Herstellung hochviskoser Siliconöle wird nicht beschrieben. Außerdem wird eine konventionelle Neutralisation der Katalysatoren beschrieben, die i. A. durch Salzbildung zu trüben Produkten führt.

Allen zuvor beschriebenen Verfahren ist gemein, dass die dadurch erzeugten Aminöle nicht gleichzeitig in den Hauptqualitätsmerkmalen Restflüchtigkeit, Equilibriergüte und ggf. Trübungsfreiheit sowie deren Konstanz ein zufriedenstellendes und vor allem konstantes Ergebnis liefern. Nachgeschaltete Filtrations- oder Entflüchtigungsschritte bzw. eine Nachbearbeitung durch Equilibrierung wären notwendig.

Es bestand die Aufgabe, ein Verfahren bereitzustellen, bei dem die zuvor genannten Nachteile vermieden werden, und bei dem Aminoalkylgruppen aufweisende Organopolysiloxane mit konstanten Produkteigenschaften erhalten werden, insbesondere mit niedriger und konstanter Restflüchtigkeit, konstanter gewünschter Viskosität und konstanter statistischer Verteilung der Aminoalkylgruppen aufweisenden Siloxaneinheiten im Polymer, was eine Vermeidung von Blockstrukturen dieser Einheiten und damit eine gute Equilibriergüte bedeutet.
Die Aufgabe wird durch die Erfindung gelöst.

Gegenstand der Erfindung ist ein Verfahren zur Herstellung von Aminoalkylgruppen aufweisenden Organopolysiloxanen durch
(i) Umsetzung von
   (A) linearen, cyclischen oder verzweigten Organopolysiloxanen mit
   (B) Aminoalkylsilanen, die einen SiC-gebundenen, basischen Stickstoff aufweisenden Kohlenwasserstoffrest und 2 oder 3 hydrolysefähige Gruppen aufweisen,
      oder deren Teil- oder Vollhydrolysate, gegebenenfalls in Gegenwart von
   (C) basischen Katalysatoren
      und gegebenenfalls
   (D) Kettenterminierungsreagenzien und
(ii) gegebenenfalls anschließend an die Umsetzung (i) Neutralisation der gegebenenfalls eingesetzten basischen Katalysatoren (C)
mit der Maßgabe, dass Verbindungen (A), (B) und ggf. (D) gegebenenfalls in Gegenwart von Katalysator (C) kontinuierlich in einem Reaktionsraum umgesetzt werden, dessen Verhältnis Länge zu Durchmesser gleich vier oder größer ist.

Bei dem erfindungsgemäßen Verfahren werden die Verbindungen (A), (B), ggf. (C) und ggf. (D) vorzugsweise kontinuierlich durch den Reaktionsraum geleitet und dort werden die Verbindungen (A), (B) und ggf. (D) ggf. in Gegenwart des Katalysators (C) zur Reaktion gebracht, und aus dem Reaktionsraum werden kontinuierlich die so erhaltenen Aminoalkylgruppen aufweisenden Organopolysiloxane abgeführt.

Vorzugsweise erfolgt die Umsetzung (i) in Gegenwart von basischen Katalysatoren (C).

Anschließend an die Umsetzung (i) erfolgt vorzugsweise kontinuierlich die Neutralisation der basischen Katalysatoren (C).

Vorzugsweise hat der Reaktionsraum ein Verhältnis von Länge zu Durchmesser von 4 bis 1000, bevorzugt 5 bis 100, besonders bevorzugt 6 bis 10.

Der Begriff Organopolysiloxane soll im Rahmen der vorliegenden Erfindung sowohl dimere als auch oligomere als auch polymere Siloxane umfassen.

Mit dem erfindungsgemäßen Verfahren können Aminöle beliebig möglicher Aminzahl erzeugt werden. Die Aminzahl entspricht dabei der Anzahl der ml einer 1M HCl, die zum Neutralisieren von 1 g Substanz erforderlich sind, und wird in Millimol Amingruppen pro Gramm Substanz angegeben. Vorzugsweise ist der Aminzahlbereich zwischen 0,001 und 12,5, bevorzugt der Bereich zwischen 0,01 und 5, besonders bevorzugt der Bereich zwischen 0,1 und 3 mmol Amingruppen pro Gramm Substanz.

Die Viskositäten der nach dem erfindungsgemäßen Verfahren hergestellten Aminöle können zwischen wasserflüssiger und standfester Konsistenz liegen. Die Viskosität, stets gemessen bei 25°C, beträgt vorzugsweise 1 mPa·s bis 10.000.000 mPa·s, bevorzugt 100 mPa·s bis 100.000 mPa·s, besonders bevorzugt 500 mPa·s bis 50.000 mPa·s.

Zur Durchführung des erfindungsgemäßen Verfahrens werden die zur Herstellung der Aminöle eingesetzten Ausgangsverbindungen (A), (B) und ggf. (D) durch eine Kammer geleitet, deren Verhältnis Länge/Durchmesser gleich vier oder höher beträgt. Eine solche Kammer kann zum Beispiel in Loop-Reaktoren, Knetern, Extrudern, Strömungsrohren, Rohrreaktoren, Microreaktoren oder Kreiselpumpen, sowie in beliebigen Kombinationen davon enthalten sein. Die Erfahrung hat dabei gezeigt, dass sich die Verfahrensweise im Extruder oder Kneter vor allem zur Erzeugung hoch viskoser oder standfester Aminöle (bei 25°C gemessene Viskosität größer als 50.000 mPa·s), die Verfahrensweise im Rohrreaktor vor allem zur Erzeugung fließfähiger Aminöle (bei 25°C gemessene Viskosität kleiner als 50.000 mPa·s) eignet. Die Verfahrensweise im Extruder oder Kneter zur Erzeugung hoch viskoser oder standfester Aminöle (bei 25°C gemessene Viskosität größer als 50.000 mPa·s) ist daher bevorzugt, die Verfahrensweise im Rohrreaktor zur Erzeugung fließfähiger Aminöle (bei 25°C gemessene Viskosität kleiner als 50.000 mPa·s) besonders bevorzugt.

Bei dem erfindungsgemäßen Verfahren werden die Edukte und ggf. der Katalysator vorzugsweise kontinuierlich in den Reaktionsraum gefördert oder gepumpt und darin vermischt, wobei die Edukte und ggf. der Katalysator vor dem Erreichen des Reaktionsraums bzw. der Vereinigung im Reaktionsraum vorgeheizt werden können. Zur Vorheizung eignen sich u. a. elektrische Heizmäntel und -drähte, die die Eduktzuleitungen umgeben sowie entweder doppelwandige Eduktzuleitungen, die von einem beheizten Medium durchströmt werden oder einwandige Eduktzuleitungen, die durch das Bad eines aufgeheizten Mediums verlaufen. Falls der Katalysator nicht mit den Edukten in den Reaktionsraum gebracht wird, kann es sich ggf. um einen im Reaktionsraum immobilisierten oder auf einen ggf. polymeren Träger aufgebrachten basischen Katalysator handeln. Die einzelnen Volumenströme der Edukte untereinander werden zweckgemäß eingeregelt, um die gewünschte statistische Verteilung funktioneller Gruppen im Polymer sowie die gewünschte Produktmolekulargewichtsverteilung zu erhalten. Der Gesamtvolumenstrom im gesamten Reaktor richtet sich nach der gewünschten Verweilzeit im Reaktor. Der Reaktionsraum kann beheizt sowie im Ganzen oder auch nur teilweise durchmischt bzw. geknetet werden. Zur Beheizung eignen sich u. a. elektrische Heizmäntel und -drähte, die den Reaktionsraum umgeben oder ein doppelwandiger Reaktionsraum, der von einem beheizten Medium durchströmt wird. Zur Durchmischung eignen sich u. a. sog. Statikmischer, die im Reaktionsraum angebracht werden können, oder mechanisch angetriebene Rührer (Kraftübertragung direkt z. B. über eine Welle oder eine Kombination aus Magnetkupplung und Welle) oder Gasströme (z. B. Stickstoff), die Turbulenzen verursachen.

Das Material des Reaktors kann von Metall, wie Chrom-Vanadium-Stahl-Reaktoren, emaillierten Stahl-Raktoren bis hin zu Glasreaktoren variieren.

Die Umsetzungen im Reaktionsraum erfolgen vorzugsweise bei einer Temperatur von 50 bis 180°C, bevorzugt 80 bis 130 °C.

Die Reaktionszeiten und damit die durchschnittlichen Verweilzeiten betragen vorzugsweise 1 bis 180 Minuten, bevorzugt 10 bis 120 Minuten und besonders bevorzugt 20 bis 90 Minuten.

Außerdem kann der Druck im Reaktionsraum auf einen beliebigen, dem jeweiligen Reaktortyp angepassten Wert eingeregelt werden, wobei Werte zwischen dem den Reaktor umgebenden Atmosphärendruck (ca. 1013 mbar) und 0,1 mbar bevorzugt, Werte zwischen 100 und 1 mbar besonders bevorzugt sind, um die während der Reaktion ggf. auftretenden flüchtigen Komponenten kontinuierlich über die Gasphase destillativ zu entfernen. Zur Unterstützung der destillativen Entfernung flüchtiger Komponenten kann zusätzlich ein sog. Purge-Gasstrom durch den Reaktionsraum geleitet werden, wobei das inerte Stickstoffgas bevorzugt wird.

Nach erfolgter Reaktion, d. h. nach dem Durchlaufen der Reaktionszone in der gewünschten Verweilzeit, wird der ggf. in der Reaktionsmischung vorhandene Katalysator (C) deaktiviert. Dies kann z. B. durch chemische Reaktion des Katalysators mit einem Deaktivator - meist ein Neutralisationsmittel oder Inhibitor - erfolgen oder aber durch thermische Deaktivierung, indem das Reaktionsgemisch eine eigens auf die dazu notwendige Temperatur gebrachte Zone des Reaktors durchläuft. Falls sich durch die Reaktionsführung oder die Katalysatordeaktivierung Feststoffe im geförderten Reaktionsprodukt befinden, so können diese ggf. durch nachgeschaltete Verfahren entfernt werden. Bei solchen nachgeschalteten Verfahren kann es sich um eine kontinuierliche Filtration oder eine kontinuierliche Extraktion mit einem geeigneten Lösungsmittel oder um ein kontinuierliches adsorptives Verfahren an einem geeigneten Adsorptionsmittel handeln.

Nach dem Durchlaufen einer Abkühlzone, in der das Reaktionsprodukt durch das Wärmetauschprinzip auf eine gewünschte Temperatur abgekühlt wurde, kann das Reaktionsprodukt kontinuierlich in Vorratsbehälter oder Endgebinde abgefüllt oder kontinuierlich weiteren Anlagenteilen zugeführt werden, wie z. B. einer kontinuierlichen Dispergiereinrichtung zur Herstellung von die nach dem erfindungsgemäßen Verfahren erhaltenen Aminöle enthaltenden Dispersionen.

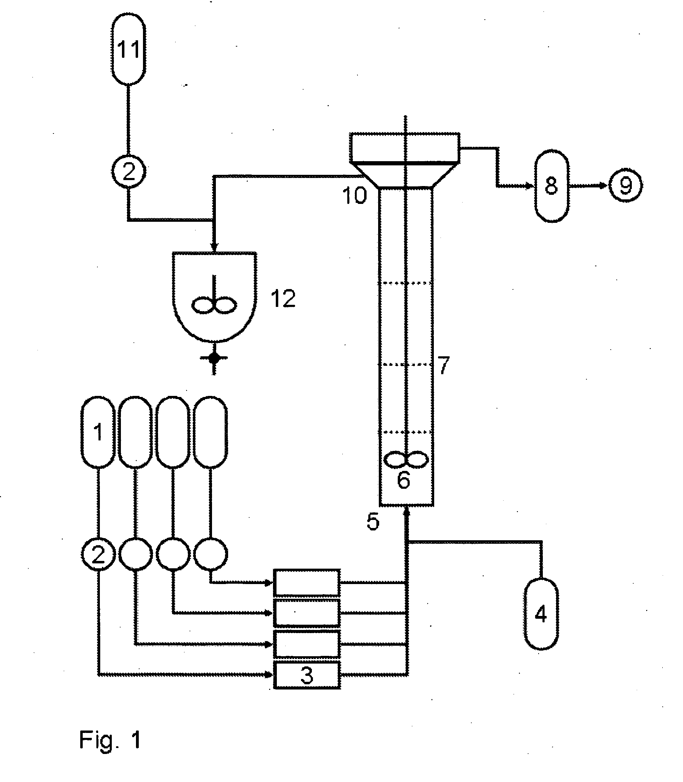

In einer bevorzugten Ausführungsform des erfindungsgemäßen Verfahrens (Zahlen in Klammern beziehen sich auf Fig. 1) werden die Ausgangsverbindungen (A), (B) und ggf. (D) und der Katalysator (C) aus entsprechenden Behältern (1) über Pumpen bzw. Pumpe/Waage-Kombinationen (2) kontinuierlich durch Vorwärmer (3) und anschließend durch einen heizbaren Reaktor (5) geleitet. Durch eine Stickstoffzuleitung (4) kann ggf. ein Purge-Gasstrom zum Entfernen von Leichtsiedern zugeschaltet werden. Im Reaktor befinden sich ein oder mehrere Rührer oder Statik-Mischelemente (6) sowie ein oder mehrere Loch- bzw. Siebböden (7). In einer Kühlfalle (8) können Leichtsieder mit Hilfe einer geregelten Vakuumpumpe (9) kondensiert werden. Nach dem Durchströmen des Produktübertritts (10) wird aus dem Deaktivatorbehälter (11) kontinuierlich der Deaktivator des Katalysators zudosiert und das Produkt in einem gerührten Produktsammeltank (12) aufgefangen und abgekühlt.

Als Organopolysiloxane (A) werden bei dem erfindungsgemäßen Verfahren vorzugsweise solche ausgewählt aus der Gruppe von linearen Polydiorganosiloxanen der allgemeinen Formel

HOR₂SiO(R₂SiO)ₓSiR₂OH (I)

und

R₃SiO(R₂SiO)_{y}SiR₃ (II)

cyclischen Polydiorganosiloxanen der allgemeinen Formel

(OSiR₂)_{z} (III)

und deren Mischungen eingesetzt,
wobei R gleich oder verschieden sein kann und einen einwertigen gegebenenfalls halogenierten Kohlenwasserstoffrest mit 1 bis 18 Kohlenstoffatomen bedeutet,
x 0 oder eine ganze Zahl von 1 bis 800, bevorzugt 10 bis 450, besonders bevorzugt 30 bis 150, ist,
y 0 oder eine ganze Zahl von 1 bis 800, bevorzugt 10 bis 450, besonders bevorzugt 30 bis 150, ist und
z eine ganze Zahl von 3 bis 12 ist.

Innerhalb bzw. entlang der Siloxankette der Siloxane der zuvor angegebenen Formeln (I) - (III) können, was durch derartige Formeln üblicherweise nicht dargestellt wird, zusätzlich zu den Diorganosiloxaneinheiten R₂SiO noch andere Siloxaneinheiten vorliegen. Beispiele für solche anderen, meist nur als Verunreinigung vorliegenden Siloxaneinheiten sind solche der Formeln RSiO_{3/2}, R₃SiO_{1/2} und SiO₂, wobei R die dafür angegebene Bedeutung hat.

Vorzugsweise werden bei dem erfindungsgemäßen Verfahren die Organopolysiloxane (A) in Mengen 99,99 bis 0,1 Gew.-%, bevorzugt 99,9 bis 51 Gew.-%, besonders bevorzugt 99 bis 18 Gew.-%, jeweils bezogen auf das Gesamtgewicht der Reaktionsmischung aus (A), (B), (C) und ggf. (D) eingesetzt. Vorzugsweise werden bei dem erfindungsgemäßen Verfahren als Aminoalkylsilane (B) solche der allgemeinen Formel

XₙR₍₃₋ₙ₎SiZ (IV)

sowie deren Teil- oder Vollhydrolysate eingesetzt, wobei
R die zuvor dafür angegebene Bedeutung hat,
X eine hydrolysefähige Gruppe ausgewählt aus der Gruppe von -OR¹, -NR'₂ und -Cl ist, vorzugsweise -OR¹ ist,
R¹ einen einwertigen Alkylrest mit 1 bis 18 Kohlenstoffatomen bedeutet, der durch ein oder zwei Ethersauerstoffatome substituiert sein kann,
R' Wasserstoff oder einen einwertigen Kohlenwasserstoffrest mit 1 bis 18 Kohlenstoffatomen bedeutet,
Z einen einwertigen SiC-gebundenen, basischen Stickstoff aufweisenden Kohlenwasserstoffrest bedeutet und n 2 oder 3 ist.

Beispiele für Kohlenwasserstoffreste R, R¹ oder R' sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl-und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Die Kohlenwasserstoffreste R, R¹ oder R' enthalten gegebenenfalls eine aliphatische Doppelbindung. Beispiele sind Alkenylreste, wie der Vinyl-, Allyl-, 5-Hexen-1-yl-, E-4-Hexen-1-yl-, Z-4-Hexen-1-yl-, 2-(3-Cyclohexenyl)-ethyl- und Cyclododeca-4,8-dienylrest. Bevorzugte Reste R mit aliphatischer Doppelbindung sind der Vinyl-, Allyl-, und 5-Hexen-1-ylrest. Vorzugsweise enthalten jedoch höchstens 1% der Kohlenwasserstoffreste R eine Doppelbindung.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Kohlenwasserstoffrest mit 1 bis 18 Kohlenstoffatomen, wobei der Methylrest besonders bevorzugt ist.

Beispiele für R¹ sind CH₃-, CH₃CH₂-, (CH₃)₂CH-, CH₃CH₂CH₂-, CH₃CH₂CH₂CH₂-, CH₃CH₂OCH₂CH₂-, CH₃CH₂OCH₂- und CH₃OCH₂CH₂- Reste.

Vorzugsweise ist Z in Formel (IV) ein Rest der Formel

-R²-[NR³-R⁴-]_{g}NR³₂.

wobei R² ein zweiwertiger linearer oder verzweigter Kohlenwasserstoffrest mit 1 bis 18 Kohlenstoffatomen bedeutet,
R³ die Bedeutung von R¹ hat oder einen Acylrest bedeutet, vorzugsweise ein Wasserstoffatom ist,
R⁴ ein zweiwertiger Kohlenwasserstoffrest mit 1 bis 6 Kohlenstoffatomen und
g 0, 1, 2, 3 oder 4, vorzugsweise 0 oder 1 ist.

Bevorzugte Beispiele für Reste Z sind:
H₂N(CH₂)₃ -
H₂N (CH₂)₂NH (CH₂)₃-
H_{2N} (CH₂)₂NH (CH₂) CH (CH₃) CH₂-
(Cyclohexyl) NH (CH₂)₃-
CH₃NH (CH₂)₃-
(CH₃)₂N (CH₂)₃-
CH₃CH₂NH (CH₂)₃-
(CH₃CH₂)₂N (CH₂)₃-
CH₃NH (CH₂)₂NH (CH₂)₃-
(CH₃)₂N(CH₂)NH(CH₂)₃-
CH₃CH₂NH (CH₂)₂NH(CH₂)₃-
(CH₃CH₂)₂N(CH₂)₂NH (CH₂)₃-
und deren teil- oder vollacylierte Formen.

Beispiele für Aminoalkylsilane (IV) sind
(3-Aminopropyl)dimethoxymethylsilan,
(3-Aminopropyl)diethoxymethylsilan,
(3-Aminopropyl)trimethoxysilan,
(3-Aminopropyl)triethoxysilan,
[N-(2-Aminoethyl)-3-aminopropyl]dimethoxymethylsilan,
[N-(2-Aminoethyl)-3-aminopropyl]diethoxymethylsilan,
[N-(2-Aminoethyl)-3-aminopropyl]trimethoxysilan,
[N-(2-Aminoethyl)-3-aminopropyl]triethoxysilan,
(Aminomethyl)dimethoxymethylsilan,
(Aminomethyl)diethoxymethylsilan,
(Aminomethyl)trimethoxysilan,
(Aminomethyl)triethoxysilan.

Besonders bevorzugt sind
[N-(2-Aminoethyl)-3-aminopropyl]dimethoxymethylsilan,
[N-(2-Aminoethyl)-3-aminopropyl]trimethoxysilan und
(3-Aminopropyl)dimethoxymethylsilan
sowie deren cyclische oder lineare Teil- oder Vollhydrolysate.

Bevorzugt werden die Aminoalkylsilanhydrolysate (B) aus aminoalkylfunktionellen Dialkoxysilanen, wie (3-Aminopropyl)dimethoxymethylsilan oder [N-(2-Aminoethyl)-3-aminopropyl]dimethoxymethylsilan, durch Hydrolyse in Wasser hergestellt.

Als Aminoalkylsilanhydrolysate (B) werden daher vorzugsweise solche der allgemeinen Formel

HO(ZRSiO)ₘH (VI)

eingesetzt,
wobei R und Z die zuvor dafür angegebene Bedeutung haben und m eine ganze Zahl von 2 bis 50 ist.

Vorzugsweise werden Aminoalkylsilane (B) bzw. deren Teil- oder Vollhydrolysate in Mengen von 0,01 bis 99,9 %, bevorzugt 0,1 bis 82 % und besonders bevorzugt 1 bis 49 % eingesetzt, jeweils bezogen auf das Gesamtgewicht der eingesetzten Polysiloxane (A) und ggf. (D).

Als basische Katalysatoren (C) können Kondensations- und Equilibrierungskatalysatoren bei dem erfindungsgemäßen Verfahren eingesetzt werden.
Vorzugsweise werden als basische Katalysatoren (C) Alkali- oder Erdalkalimetallhydroxide, -oxide, -alkoholate oder -siloxanolate eingesetzt, die zuvor ggf. in einem geeigneten Lösungsmittel gelöst werden.
Bevorzugt werden als basische Katalysatoren (C) Alkalimetallhydroxide, Alkalimetallalkoholate, Alkalimetallsiloxanolate und deren Mischungen eingesetzt. Beispiele für Alkalimetallhydroxide sind Kaliumhydroxid und Natriumhydroxid.
Beispiele für Alkalimetallalkoholate sind Natriummethanolat und Natriumethanolat.
Beispiele für Alkalisiloxanolate sind Natriumsiloxanolate. Bevorzugt werden Kalium- oder Natriumhydroxid (ggf. in dem Lösungsmittel Methanol oder Wasser), und Natriummethanolat (ggf. in dem Lösungsmittel Methanol) verwendet.

Die basischen Katalysatoren (C) werden vorzugsweise in Mengen von 1 bis 1000 Gew.-ppm, bevorzugt 10 bis 400 Gew.-ppm, besonders bevorzugt 30 bis 200 Gew.-ppm, jeweils bezogen auf das Gesamtgewicht der Reaktionsmischung aus (A), (B), (C) und ggf. (D), eingesetzt.

Falls bei dem erfindungsgemäßen Verfahren reaktive Si-OHterminierte Polysiloxane der Formel (I) zum Einsatz kommen, kann zusätzlich ein Kettenterminierungsreagenz (D), ein sogenannter Stopper oder Stoppersiloxan, verwendet werden. Dazu sind prinzipiell alle Verbindungen geeignet, die mit Si-OH-Gruppen reagieren können und bezüglich ihrer Reaktivität mit Si-OH-Gruppen monofunktionell sind oder solche monofunktionellen Gruppen bilden können. Darüber hinaus können diese Kettenterminierungsreagenzien weitere funktionelle Gruppen tragen, die nicht mit den Si-OH-Gruppen oder den Aminoalkylgruppen reagieren, und die bei einer gegebenenfalls weiteren Umsetzung des nach dem erfindungsgemäßen Verfahren hergestellten Aminöls zur Reaktion gebracht werden, um zusätzliche Effekte zu erzielen.

Als Kettenterminierungsreagenz (D) werden bei dem erfindungsgemäßen Verfahren vorzugsweise solche ausgewählt aus der Gruppe von Monoalkoxysilanen, Aminomonoalkoxysilanen, lineare und cyclische Silazane, Alkohole, kurzkettige lineare Diorganopolysiloxane und deren Mischungen eingesetzt.

Dazu zählen z. B. Monoalkoxytrialkylsilane, (Aminoalkyl)monoalkoxydialkylsilane, lineare oder cyclische Silazane, Alkohole, kurzkettige lineare Polydiorganosiloxane oder deren Mischungen.

Beispiele für Monoalkoxytrialkylsilane sind solche der Formel

R₃Si(OR¹) (VII)

und

Beispiele für (Aminoalkyl)monoalkoxydialkylsilane sind solche der Formel

R₂ZSi(OR¹) (VIII)

wobei R, R¹ und Z die zuvor dafür angegebene Bedeutung haben.

Beispiele für Alkohole sind solche der allgemeinen Formel

H-[O(CHR⁵)₁]ₖ OR⁶ (IX)

wobei R die zuvor dafür angegebene Bedeutung hat,
R⁵ gleich oder verschieden sein kann und ein Wasserstoffatom oder einen C₁- bis C₁₈-Kohlenwasserstoffrest bedeutet,
R⁶ einen C₁- bis C₃₀-Kohlenwasserstoffrest oder eine Gruppe der allgemeinen Formel -(C=O)-R⁷ bedeutet, wobei R⁷ ein Rest R⁵ oder O-R⁵ ist,
1 2, 3 oder 4 und
k 0 oder eine ganze Zahl von 1 bis 100 ist.

Beispiele für kurzkettige lineare Polydiorganosiloxane als Kettenterminierungsreagenz (D) sind kurzkettige endständige Triorganosiloxygruppen aufweisende Polydiorganosiloxane der Formel

R₃SiO(SiR₂O)ᵥSiR₃ (X)

und
kurzkettige endständige Hydroxy- oder Alkoxydiorganosiloxygruppen aufweisende Polydiorganosiloxane der Formel

(R"O)R₂SiO(SiR₂O)_{w}SiR₃ (XI)

wobei R die zuvor dafür angegebene Bedeutung hat,
R" ein Wasserstoffatom oder ein Rest R¹ ist,
v 0 oder eine ganze Zahl von 1 bis 150, bevorzugt 30 bis 100, ist und
w 0 oder eine ganze Zahl von 1 bis 150, bevorzugt 30 bis 100, ist.

Falls beim erfindungsgemäßen Verfahren ein Stopper oder Stoppersiloxan (D) als Kettenterminierungsreagenz zum Einsatz kommt, wird dieses vorzugsweise in Mengen von 0,01 bis 50 %, bevorzugt 0,05 bis 30 % und besonders bevorzugt 1 und 20 %, jeweils bezogen auf das Gesamtgewicht der Reaktionsmischung aus (A), (B), (C) und (D), eingesetzt.

Die Deaktivierung des basischen Katalysators (C) kann durch die Zugabe von Neutralisationsmitteln (E) erfolgen, die mit den basischen Katalysatoren Salze bilden. Solche Neutralisationsmittel können z. B. Carbonsäuren oder Mineralsäuren sein. Bevorzugt sind Carbonsäuren, wie Methan-(Ameisensäure), Ethan- (Essigsäure), Propansäure.

Die Deaktivierung des basischen Katalysators (C) erfolgt jedoch bevorzugt durch die Zugabe von Neutralisationsmitteln (E), die mit den basischen Katalysatoren Salze bilden, die in den erhaltenen Aminölen löslich sind und somit keinerlei Trübungen erzeugen. Beispiele für solche Neutralisationsmittel (E) sind langkettige bei Raumtemperatur flüssige Carbonsäuren, wie n-Octansäure, 2-Ethylhexansäure, n-Nonansäure und Ölsäure, Hexadecan- und Octadecansäure, Kohlensäureester wie Propylencarbonat, oder Carbonsäureanhydride wie Octenylbernsteinsäureanhydrid.

Weitere Beispiele für Neutralisationsmittel (E), die mit den basischen Katalysatoren Salze bilden, die in den erhaltenen Aminölen löslich sind und somit keinerlei Trübungen erzeugen, sind Triorganosilylphosphate, vorzugsweise Trimethylsilylphosphate und Triorganophosphate, vorzugsweise Mischungen von Mono-, Di- und Triisotridecylphosphaten (erhältlich unter der Bezeichnung Hordaphos^{®} MDIT bei der Fa. Clariant). Bevorzugt werden als Trimethylsilylphosphate dabei Zusammensetzungen bestehend im wesentlichen aus
0-50 Gew.-% Monosilylphosphat der Formel: [(CH₃)₃SiO](HO)₂P=O
20-100 Gew.-% Disilylphosphat der Formel: [(CH₃)₃SiO]₂(HO)P=O
0-70 Gew.-% Trisilylphosphat der Formel: [(CH₃)₃SiO]₃P=O
wobei die Gesamtmenge 100 Gew.-% beträgt, eingesetzt. Die nötige Menge an Neutralisationsmitteln (E) richtet sich nach der eingesetzten Menge an basischen Katalysatoren (C) und beträgt vorzugsweise 0,05 bis 0,50 %, bevorzugt 0,15 bis 0,30 %, jeweils bezogen auf das Gesamtgewicht der Reaktionsmischung aus (A), (B), (C) und ggf. (D). Die Neutralisation kann dabei vor oder nach dem Abkühlen der Reaktionsmischung erfolgen.

Die nach dem erfindungsgemäßen Verfahren erhaltenen Aminoalkylgruppen aufweisenden Organopolysiloxane (Aminöle) weisen eine Restflüchtigkeit von vorzugsweise weniger als 4 Gew.-%, bevorzugt weniger als 2 Gew.-%, besonders bevorzugt weniger als 1 Gew.-% auf.
Die Restflüchtigkeit ist ein thermisch ermittelter Wert und wird dabei definiert als die Menge an flüchtigen Bestandteilen in Gew.-% beim Erhitzen einer Probenmenge von 5 g bei 120°C in einer Zeit von 60 min (120°C/5 g/60 min).
Ein großer Teil der flüchtigen Bestandteile sind cyclische Siloxane, wobei neben höheren Cyclen Octamethyltetrasiloxan (D₄) enthalten ist.

Eine besonders bevorzugte Ausführungsform des erfindungsgemäßen Verfahrens liefert Aminöle mit außerordentlich niedrigen Restflüchtigkeiten, vorzugsweise kleiner als 2%, bevorzugt kleiner als 1 Gew.-%, bei besonders niedrigen durchschnittlichen Verweilzeiten, vorzugsweise zwischen 1 und 50 Minuten, ohne dass ein reduzierter Druck gegenüber dem den Reaktor umgebenden Atmosphärendruck an den Reaktor angelegt werden muss. Bei dieser besonders bevorzugten Ausführungsform des erfindungsgemäßen Verfahrens werden als Aminoalkylsilane (B) Teil- und Vollhydrolysate der Aminoalkylsilane (B), bevorzugt Aminoalkylsilanhydrolysate der Formel (VI), eingesetzt. Bevorzugt werden bei diesem Verfahren Organopolysiloxane (A) der Formeln (I) und/oder (II) zusammen mit den Aminoalkylsilanhydrolysaten (B), bevorzugt der Formel (VI), eingesetzt.

Das erfindungsgemäße Verfahren hat den Vorteil, dass Aminoalkylgruppen aufweisende Organopolysiloxane (Aminöle) mit konstanter Produktqualität, insbesondere einer niedrigen und konstanten Restflüchtigkeit, einer konstanten gewünschten Viskosität und einer guten und konstanten Equilibriergüte (Vermeidung von Blockstrukturen der Aminoalkylgruppen in den Aminoalkylgruppen aufweisenden Organopolysiloxanen) erhalten werden. Durch den Einsatz geeigneter Neutralisationsmittel (E) können, wenn das gewünscht ist, insbesondere trübungsfreie Aminöle erhalten werden.

Durch das erfindungsgemäße Verfahren werden bevorzugt Aminoalkylgruppen aufweisende Organopolysiloxane der allgemeinen Formel

(R⁸O)_{q}R_{3-q}SiO(ZRSiO)ₒ(R₂SiO)ₚSiR_{3-q}(OR⁸)_{q} (XII)

wobei R und Z die zuvor dafür angegebene Bedeutung haben,
R⁸ ein Wasserstoffatom oder R¹ ist,
o eine ganze Zahl von 1 bis 1000, bevorzugt von 2 bis 260, ist,
p eine ganze Zahl von 0 bis 2500, bevorzugt von 50 bis 650, ist
q 0 oder 1 ist.
erhalten.

Die nach dem erfindungsgemäßen Verfahren erhaltenen Aminoalkylgruppen aufweisenden Organopolysiloxane können unter anderem als Mittel zur Behandlung von porösen oder nicht porösen, saugfähigen oder nicht saugfähigen Substraten wie Leder, Vliesstoffen, Cellulosematerialien (Pulp & Paper), Textilien, Non-Wovens und Tissues, natürlichen und künstlichen Fasern, Gläsern und Keramiken, porösen mineralischen Baustoffen, Baubeschichtungen und Holz sowie als Bestandteil von Polier- und Beschichtungsmitteln für z. B. lackierte und nicht lackierte Metalle, Kunststoffe und Laminate verwendet werden, wobei den beschriebenen Substraten durch die Behandlung mit den nach dem erfindungsgemäßen Verfahren erhaltenen Aminoalkylgruppen tragenden Organopolysiloxanen hauptsächliche Eigenschaften wie Hydrophobie und/oder Weichgriff verliehen werden. Des Weiteren können die nach dem erfindungsgemäßen Verfahren erhaltenen Aminoalkylgruppen aufweisenden Organopolysiloxane unter anderem als Bestandteil von Entschäumerformulierungen, zur Papierleimung und Gipskarton-Beschichtung, als Pflegemittel für lackierte und nicht lackierte Metalle, Kunststoffe, Laminate, Gummis und Kautschuke, als Dispergierhilfsmittel, als Netzmittel, als Trenn(hilfs-)mittel, als Lackadditive, als PU-Schaumstabilisatoren sowie im Bereich der Körperpflege als Wirkstoffe in Haarkuren, Haarshampoos und Hautpflegemitteln eingesetzt werden. Die nach dem erfindungsgemäßen Verfahren erhaltenen Aminoalkylgruppen tragenden Organopolysiloxane können gelöst in organischen Lösemitteln oder dispergiert in Wasser, vorzugsweise in Form wässriger Emulsionen verwendet werden. Dabei können die nach dem erfindungsgemäßen Verfahren erhaltenen Aminoalkylgruppen aufweisenden Organopolysiloxane in der freien Aminform oder in Salzform, wie beispielsweise als Ammoniumchloridsalz oder Ammoniumcarboxylatsalz durch Zusatz von Salzsäure oder der entsprechenden Carbonsäure, zum Einsatz kommen. Zusammensetzungen, die die nach dem erfindungsgemäßen Verfahren erhaltenen Aminoalkylgruppen aufweisenden Organopolysiloxane enthalten, können weitere Zutaten enthalten, wie Tenside, Verdicker, die Rheologie verändernde Additive, Parfüme, Wachse, Weichmacher, Reinigungsmittel, Schmieröle, Elektrolyte, Aromastoffe, Biozide, pharmazeutische oder kosmetische Wirkstoffe.

Es folgen ausgewählte Beispiele, welche die Erfindung verdeutlichen sollen. Die Erfindung selbst ist allerdings keinesfalls auf diese Beispiele beschränkt. Die in den Beispielen verwendeten Prozentangaben bei der Bestimmung der Restflüchtigkeiten (120°C/5 g/60 min) beziehen sich auf das Gewicht.
Alle angegebenen Viskositäten wurden bei 25°C gemessen.

Für die Beispiele 1-6 wurde als kontinuierlicher Reaktor ein Glas-Rohrreaktor (Innendurchmesser 80 mm, Höhe 500 mm, Verhältnis Länge/Durchmesser = 6.25, Volumen ca. 2.5 L) verwendet. Der Reaktor war in mehrere, durch PTFE-Lochböden getrennte Zonen unterteilt und mit einem Rührer ausgestattet. Die Edukte sowie der Katalysator (zu Reaktionsparametern und Mengenverhältnissen siehe nachfolgende Tabellen der jeweiligen Beispiele) wurden durch das Durchlaufen von Temperiereinheiten auf die angegebenen Temperaturen erwärmt und in den angegebenen Verhältnissen kontinuierlich über Pumpensysteme in die auf Reaktortemperatur und Reaktordruck eingestellte Reaktionszone gefördert.
Die Terminierung der Reaktion wurde durch das kontinuierliche Zudosieren eines Deaktivators an einer festen Position im Rohrreaktor erreicht. Diese Position befand sich im Bereich des Produktablaufs nach Verlassen der beheizten Reaktionszone. Daraus ergibt sich die durchschnittliche Verweilzeit der Reaktionsmischung in der Reaktionszone, die durch den Gesamtdurchsatz an geförderten Edukten festgelegt wird. Aus dem Volumen des Reaktors von ca. 2.5 L ergibt sich beispielsweise bei einem Durchsatz von 2.5 L/h eine durchschnittliche Verweilzeit von 1 h, bei einem Durchsatz von 1.25 L eine durchschnittliche Verweilzeit von 2 h.
Der Produktaustritt erfolgte in einen gekühlten und gerührten Auffangbehälter, um den Deaktivator gleichmäßig im Produkt zu verteilen und das Produkt abzukühlen.

### Vergleichsversuch 1 (diskontinuierlich):

Zur Herstellung eines trübungsfreien Aminöls einer Aminzahl von 0,25 und einer Viskosität von 200-220 mPa·s wurden folgende Edukte gemäß Tabelle 1 a und b eingesetzt:

**Tabelle 1a:**

| | |
|---|---|
| Polydimethylsiloxan | HO-SiMe₂-(O-SiMe₂)₄₀-OH |
| (Aminoalkyl)silan | [N-(2-Aminoethyl)-3-aminopropyl]-dimethoxy-methyl-silan |
| Stoppersiloxan | Me₃Si-(O-SiMe₂)₂₃-OSiMe₃ |
| Katalysator | Natriummethanolat in Methanol (30 Gew.-%) |
| Deaktivator | Tris(trimethylsilyl)phosphat |

**Tabelle 1b:**

| | Einsatzmenge | Gew.-% | Vol.-% |
|---|---|---|---|
| Polydimethylsiloxan | 872 g | 80.73 | 80.83 |
| (Aminoalkyl)silan | 26.5 g | 2.45 | 2.31 |
| Stoppersiloxan | 179 g | 16.57 | 16.59 |
| Katalysator | 0.67 g | 0.06 | 0.08 |
| Deaktivator | 0.6 g | 0.19 | 0.18 |

In einem 2-L-Dreihalskolben (Verhältnis Länge/Durchmesser = 1) mit mechanischem Rührer, Innenthermometer und Rückflusskühler wurde eine Mischung aus 872 g Polydimethylsiloxan, 26.5 g (Aminoalkyl)silan, 179 g Stoppersiloxan und 0.67 g Katalysatorlösung unter Rühren bei einem auf 50 mbar reduzierten Druck auf 80°C erhitzt. Die flüchtigen Komponenten wurden in einer mit flüssigem Stickstoff gekühlten Kühlfalle aufgefangen. Nach 90 min wurde die Anlage mittels Stickstoffstrom auf Normaldruck gebracht, der Deaktivator zugesetzt und unter Rühren abgekühlt. Man erhielt ein farbloses trübungsfreies Aminöl.
Die folgende Tabelle 1c fasst die analytischen Daten von unabhängig voneinander durchgeführten Versuchen nach der vorangegangenen Vorschrift zusammen, wobei die gleichen Chargen der Edukte verwendet wurden.

**Tabelle 1c:**

| Versuch | 1 | 2 | 3 | 4 | Standardabw. |
|---|---|---|---|---|---|
| Restflüchtigkeit des Produkts [%] | 4.6 | 5.3 | 5.4 | 4.3 | 0.46 |
| Viskosität [mPa.s] | 238 | 183 | 155 | 220 | 32.2 |

### Beispiel 1:

Im Unterschied zu Vergleichsversuch 1 wurde eine Reaktionsmischung gleicher Edukt-Volumenverteilung gemäß Tabelle 2a unter folgenden Reaktionsparametern durch den zuvor beschriebenen erfindungsgemäßen Rohrreaktor geleitet: Der Produktaustritt sowie die kontinuierliche Katalysatordeaktivierung erfolgte nach einer durchschnittlichen Verweilzeit von 90 min. Nach einer Laufzeit des Reaktors von 10 h wurde die Anlage auf Raumdruck gebracht und der Produktauffangbehälter entleert. Man erhielt ein farbloses trübungsfreies Öl.

**Tabelle 2a:**

| | |
|---|---|
| Fördermengenanteil Polydimethylsiloxan | 80.83 Vol.-% |
| Fördermengenanteil (Aminoalkyl)silan | 2.31 Vol.-% |
| Fördermengenanteil Stopper | 16.59 Vol.-% |
| Fördermengenanteil Katalysator | 0.08 Vol.-% |
| Fördermengenanteil Deaktivator | 0.18 Vol.-% |
| Reaktorinnentemperatur | 80°C |
| Temperatur Temperiereinheit Polydimethylsiloxan und (Aminoalkyl)silan | 80°C |
| Temperatur Temperiereinheit Stopper | 50°C |
| Reaktordruck | 50 mbar |

Während der Laufzeit des Reaktors wurden Proben des Reaktionsproduktes genommen. Die folgende Tabelle 2b fasst die analytischen Daten der Proben zusammen, wobei die gleichen Chargen der Edukte wie im Vergleichsversuch 1 verwendet wurden.

**Tabelle 2b:**

| Probe | 1 | 2 | 3 | 4 | 5 | 6 | Standardabw. |
|---|---|---|---|---|---|---|---|
| Restflüchtigkeit des Produkts[%] | 3.5 | 3.3 | 3.4 | 3.3 | 3.5 | 3.4 | 0.08 |
| Viskosität [mPa.s] | 210 | 228 | 219 | 224 | 221 | 224 | 5.7 |

Hochauflösende ²⁹Si-NMR-Untersuchungen der Proben 1-6 offenbarten eine ausgezeichnete Equilibriergüte, Blockstrukturen der [N-(2-Aminoethyl)-3-aminopropyl]methylsiloxyeinheiten wurden nicht beobachtet. Der Vergleich der Standardabweichungen der unter Vergleichsversuch 1 und Beispiel 1 erhaltenen Restflüchtigkeiten sowie Viskositäten verdeutlicht die konstantere Produktqualität der nach dem erfindungsgemäßen Verfahren (Beispiel 1) erhaltenen Aminöle. Die absoluten Restflüchtigkeiten der erhaltenen Aminöle sind darüber hinaus nach dem erfindungsgemäßen Verfahren (Beispiel 1) niedriger, was zusätzlich zu einer erhöhten Produktqualität beiträgt.

### Vergleichsversuch 2 (Verhältnis Länge/Durchmesser = 1.56):

Das Experiment unter Beispiel 1 wurde wiederholt, jedoch wurde der verwendete Rohrreaktor bei gleichem Durchmesser von der Länge 500 mm (Verhältnis Länge/Durchmesser = 6.25) auf die Länge 125 mm (Verhältnis Länge/Durchmesser = 1.56) verkürzt. Die Verweilzeit betrug 90 min.
Während der Laufzeit des Reaktors wurden Proben des Reaktionsproduktes genommen. Die folgende Tabelle 3a fasst die analytischen Daten der Proben zusammen, wobei die gleichen Chargen der Edukte wie im Beispiel 1 verwendet wurden.

**Tabelle 3a:**

| Probe | 1 | 2 | 3 | 4 | 5 | 6 | Standardabw. |
|---|---|---|---|---|---|---|---|
| Restflüchtigkeit des Produkts[%] | 5.2 | 4.7 | 5.0 | 4.2 | 5.5 | 4.9 | 0.41 |
| Viskosität [mPa·s] | 94 | 104 | 125 | 116 | 93 | 96 | 12.0 |

Die erhaltenen Viskositäten der Proben 1-6 waren signifikant zu niedrig und belegten, dass nicht das gewünschte Produkt erhalten wurde. Die Restflüchtigkeiten der Proben waren deutlich erhöht und schwankten stärker als unter Beispiel 1. Darüber hinaus kam es in allen Proben zu Nachtrübungen. Hochauflösende ²⁹Si-NMR-Untersuchungen ergaben eine unzureichende Equilibriergüte aller Proben.

### Beispiel 2:

Folgende Edukte gemäß Tabelle 4a wurden eingesetzt.

**Tabelle 4a:**

| | |
|---|---|
| Polydimethylsiloxan vom Typ | HO-SiMe₂-(O-SiMe₂)₄₀-OH |
| (Aminoalkyl)silan | [N-(2-Aminoethyl)-3-aminopropyl]-dimethoxy-methyl-silan |
| Stopper | n-Hexylglykol |
| Katalysator | Natriummethanolat in Methanol (30 Gew.-%) |
| Deaktivator | Tris(trimethylsilyl)phosphat |

Der Produktaustritt sowie die kontinuierliche Katalysatordeaktivierung erfolgte nach einer durchschnittlichen Verweilzeit von 90 min. Nach einer Laufzeit des Reaktors von 6 h wurde die Anlage auf Raumdruck gebracht und der Produktauffangbehälter entleert. Man erhielt ein farbloses trübungsfreies Öl mit einer Viskosität von 1450 mPa·s, einer Flüchtigkeit (120°C/5 g/60 min) von 1,09 Gew.-% und einer Aminzahl von 0,27. Hochauflösende ²⁹Si-NMR-Untersuchungen offenbarten keine Blockstrukturen der [N-(2-Aminoethyl)-3-aminopropyl]methylsiloxyeinheiten. Die Eduktmengen und Verfahrensparameter sind in Tabelle 4b zusammengefasst.

**Tabelle 4b:**

| | |
|---|---|
| Fördermengenanteil Polydimethylsiloxan | 95.0 Vol.-% |
| Fördermengenanteil (Aminoalkyl)silan | 2.7 Vol.-% |
| Fördermengenanteil Stopper | 2.0 Vol.-% |
| Fördermengenanteil Katalysator | 0.1 Vol.-% |
| Fördermengenanteil Deaktivator | 0.2 Vol.-% |
| Reaktorinnentemperatur Temperatur Temperiereinheit Polydimethylsiloxan | 85°C |
| und (Aminoalkyl)silan | 85°C |
| Temperatur Temperiereinheit Stopper | 50°C |
| Reaktordruck | 50 mbar |

### Beispiel 3:

Folgende Edukte gemäß Tabelle 5a wurden eingesetzt.

**Tabelle 5a:**

| | |
|---|---|
| Polydimethylsiloxan vom Typ | HO-SiMe₂-(O-SiMe₂)₄₀-OH |
| (Aminoalkyl)silan | [N-(2-Aminoethyl)-3-aminopropyl]-dimethoxy-methyl-silan |
| Katalysator | Natriummethanolat in Methanol (30 Gew.-%) |
| Deaktivator | Hordaphos^{®} MDIT |

Der Produktaustritt sowie die kontinuierliche Katalysatordeaktivierung erfolgte nach einer durchschnittlichen Verweilzeit von 90 min. Nach einer Laufzeit des Reaktors von 6 h wurde die Anlage auf Raumdruck gebracht und der Produktauffangbehälter entleert. Man erhielt ein farbloses trübungsfreies Öl mit einer Viskosität von 1250 mPa·s, einer Flüchtigkeit (120 °C/5 g/60 min) von 0,53 Gew.-% und einer Aminzahl von 0,30. Hochauflösende ²⁹Si-NMR-Untersuchungen offenbarten keine Blockstrukturen der [N-(2-Aminoethyl)-3-aminopropyl]methylsiloxyeinheiten. Die Eduktmengen und Verfahrensparameter sind in Tabelle 5b zusammengefasst.

**Tabelle 5b:**

| | |
|---|---|
| Fördermengenanteil Polydimethylsiloxan | 97.1 Vol.-% |
| Fördermengenanteil (Aminoalkyl)silan | 2.9 Vol.-% |
| Fördermengenanteil Katalysator | 0.02 Vol.-% |
| Fördermengenanteil Deaktivator | 0.03 Vol.-% |
| Reaktorinnentemperatur | 80°C |
| Temperatur Temperiereinheit Polydimethylsiloxan und (Aminoalkyl)silan | 80°C |
| Reaktordruck | 250 mbar |

### Beispiel 4:

Folgende Edukte gemäß Tabelle 6a wurden eingesetzt.

**Tabelle 6a:**

| | |
|---|---|
| Polydimethylsiloxan vom Typ | HO-SiMe₂-(O-SiMe₂)₂₄₅-OH |
| (Aminoalkyl)silanhydrolysat | (3-Aminopropyl)-dimethoxy-methyl-silan-Hydrolysat |
| Katalysator | Kaliumhydroxid in Ethanol (20 Gew.-%) |
| Deaktivator | Essigsäure |

Der Produktaustritt sowie die kontinuierliche Katalysatordeaktivierung erfolgte nach einer durchschnittlichen Verweilzeit von 10 min. Nach einer Laufzeit des Reaktors von 6 h wurde die Anlage auf Raumdruck gebracht und der Produktauffangbehälter entleert. Man erhielt ein farbloses Öl mit einer Viskosität von 6700 mPa·s (25 °C), einer Flüchtigkeit (120°C/5 g/60 min) von 0,21 Gew.-% und einer Aminzahl von 0,16. Hochauflösende ²⁹Si-NMR-Untersuchungen offenbarten keine Blockstrukturen der (Aminopropyl)methylsiloxyeinheiten. Die Eduktmengen und Verfahrensparameter sind in Tabelle 6b zusammengefasst.

**Tabelle 6b:**

| | |
|---|---|
| Fördermengenanteil Polydimethylsiloxan | 98.1 Vol.-% |
| Fördermengenanteil (Aminoalkyl)silanhydrolysat | 1.8 Vol.-% |
| Fördermengenanteil Katalysator | 0.1 Vol.-% |
| Fördermengenanteil Deaktivator | 0.01 Vol.-% |
| Reaktorinnentemperatur | 100°C |
| Temperatur Temperiereinheit Polydimethylsiloxan und (Aminoalkyl)silanhydrolysat | 100°C |
| Reaktordruck | kein Vakuum |

### Beispiel 5:

Folgende Edukte gemäß Tabelle 7a wurden eingesetzt.

**Tabelle 7a:**

| | |
|---|---|
| Polydimethylsiloxan vom Typ | Me₃Si-(O-SiMe₂)₃₁₀-OSiMe₃ |
| (Aminoalkyl)silanhydrolysat | (3-Aminopropyl)-dimethoxy-methyl-silan-Hydrolysat |
| Katalysator | Kaliumhydroxid in Ethanol (20 Gew.-%) |
| Deaktivator | Essigsäure |

Der Produktaustritt sowie die kontinuierliche Katalysatordeaktivierung erfolgte nach einer durchschnittlichen Verweilzeit von 10 min. Nach einer Laufzeit des Reaktors von 6 h wurde die Anlage auf Raumdruck gebracht und der Produktauffangbehälter entleert. Man erhielt ein farbloses Öl mit einer Viskosität von 1100 mPa·s (25 °C), einer Flüchtigkeit (120°C/5 g/60 min) von 0,62 Gew.-% und einer Aminzahl von 0,25. Hochauflösende ²⁹Si-NMR-Untersuchungen offenbarten keine Blockstrukturen der (Aminopropyl)methylsiloxyeinheiten. Die Eduktmengen und Verfahrensparameter sind in Tabelle 7b zusammengefasst.

**Tabelle 7b:**

| | |
|---|---|
| Fördermengenanteil Polydimethylsiloxan | 97.6 Vol.-% |
| Fördermengenanteil (Aminoalkyl)silanhydrolysat | 2.3 Vol.-% |
| Fördermengenanteil Katalysator | 0.1 Vol.-% |
| Fördermengenanteil Deaktivator | 0.01 Vol.-% |
| Reaktorinnentemperatur | 100°C |
| Temperatur Temperiereinheit Polydimethylsiloxan und (Aminoalkyl)silanhydrolysat | 100°C |
| Reaktordruck | kein Vakuum |

### Beispiel 6:

Folgende Edukte gemäß Tabelle 8a wurden eingesetzt.

**Tabelle 8a:**

| | |
|---|---|
| Polydimethylsiloxan vom Typ | HO-SiMe₂-(O-SiMe₂)₂₄₅-OH |
| (Aminoalkyl)silanhydrolysat | (3-Aminopropyl)-dimethoxy-methyl-silan-Hydrolysat |
| Katalysator | Natriummethanolat in Methanol (30 Gew.-%) |
| Deaktivator | Essigsäure |

Der Produktaustritt sowie die kontinuierliche Katalysatordeaktivierung erfolgte nach einer durchschnittlichen Verweilzeit von 25 min. Nach einer Laufzeit des Reaktors von 6 h wurde die Anlage auf Raumdruck gebracht und der Produktauffangbehälter entleert. Man erhielt ein farbloses Öl mit einer Viskosität von 13300 mPa·s (25 °C), einer Flüchtigkeit (120/5 g/60 min) von 0,20 Gew.-% und einer Aminzahl von 0,10. Hochauflösende ²⁹Si-NMR-Untersuchungen offenbarten keine Blockstrukturen der (Aminopropyl)methylsiloxyeinheiten. Die Eduktmengen und Verfahrensparameter sind in Tabelle 8b zusammengefasst.

**Tabelle 8b:**

| | |
|---|---|
| Fördermengenanteil Polydimethylsiloxan | 98.8 Vol.-% |
| Fördermengenanteil (Aminoalkyl)silanhydrolysat | 1.2 Vol.-% |
| Fördermengenanteil Katalysator | 0.02 Vol.-% |
| Fördermengenanteil Deaktivator | 0.01 Vol.-% |
| Reaktorinnentemperatur | 80°C |
| Temperatur Temperiereinheit Polydimethylsiloxan und (Aminoalkyl)silanhydrolysat | 80°C |
| Reaktordruck | kein Vakuum |

### Beispiel 7:

Folgende Edukte gemäß Tabelle 9a wurden eingesetzt.

**Tabelle 9a:**

| | |
|---|---|
| Polydimethylsiloxan vom Typ | HO-SiMe₂-(O-SiMe₂)₄₀-OH |
| (Aminoalkyl)silanhydrolysat | (3-Aminopropyl)-dimethoxy-methyl-silan-Hydrolysat |
| Stopper | Me₃Si-(O-SiMe₂)₁₄₀-OSiMe₃ |
| Katalysator | Natriummethanolat in Methanol (30 Gew.-%) |
| Deaktivator | Tris(trimethylsilyl)phosphat |

Der Produktaustritt sowie die kontinuierliche Katalysatordeaktivierung erfolgte nach einer durchschnittlichen Verweilzeit von 120 min. Nach einer Laufzeit des Reaktors von 6 h wurde die Anlage auf Raumdruck gebracht und der Produktauffangbehälter entleert. Man erhielt ein farbloses trübungsfreies Öl mit einer dynamischen Viskosität von 56200 mPa·s und einer Aminzahl von 0,84. Hochauflösende ²⁹Si-NMR-Untersuchungen offenbarten keine Blockstrukturen der (Aminopropyl)methylsiloxyeinheiten. Die Eduktmengen und Verfahrensparameter sind in Tabelle 9b zusammengefasst.

**Tabelle 9b:**

| | |
|---|---|
| Fördermengenanteil Polydimethylsiloxan | 80.0 Vol.-% |
| Fördermengenanteil (Aminoalkyl)silanhydrolysat | 8.8 Vol.-% |
| Fördermengenanteil Stopper | 10.8 Vol.-% |
| Fördermengenanteil Katalysator | 0.1 Vol.-% |
| Fördermengenanteil Deaktivator | 0.3 Vol.-% |
| Reaktorinnentemperatur | 130°C |
| Temperatur Temperiereinheit Polydimethylsiloxan und (Aminoalkyl)silanhydrolysat | 110°C |
| Temperatur Temperiereinheit Me₃Si- (O-SiMe₂)₁₄₀-OSiMe₃ | 50°C |
| Reaktordruck | 200 mbar |

## Patentansprüche

1. Verfahren zur Herstellung von Aminoalkylgruppen aufweisenden Organopolysiloxanen durch
(i) Umsetzung von
(A) linearen, cyclischen oder verzweigten Organopolysiloxanen mit
(B) Aminoalkylsilanen, die einen SiC-gebundenen, basischen Stickstoff aufweisenden Kohlenwasserstoffrest und 2 oder 3 hydrolysefähige Gruppen aufweisen,
oder deren Teil- oder Vollhydrolysate,
gegebenenfalls in Gegenwart von
(C) basischen Katalysatoren und gegebenenfalls
(D) Kettenterminierungsreagenzien und
(ii) gegebenenfalls anschließend an die Umsetzung (i) Neutralisation der gegebenenfalls eingesetzten basischen Katalysatoren (C)
mit der Maßgabe, dass Verbindungen- (A), (B) und ggf. (D) ggf. in Gegenwart von Katalysator (C) kontinuierlich in einem Reaktionsraum umgesetzt werden, dessen Verhältnis Länge zu Durchmesser gleich vier oder größer ist.

2. Verfahren nach Anspruch 1, **dadurch gekennzeichnet, dass** der Reaktionsraum Teil eines Reaktors ausgewählt aus der Gruppe der Rohrreaktoren, Loop-Reaktoren, Kneter und Extruder ist.

3. Verfahren nach Anspruch 1 oder 2, **dadurch gekennzeichnet, dass** Verbindungen (A), (B), ggf. (C) und ggf. (D) kontinuierlich durch den Reaktionsraum geleitet werden und dort die Verbindungen (A), (B) und ggf. (D) ggf. in Gegenwart des Katalysators (C) zur Reaktion gebracht werden, und aus dem Reaktionsraum kontinuierlich die so erhaltenen Aminoalkylgruppen aufweisenden Organopolysiloxane abgeführt werden.

4. Verfahren nach Anspruch 1, 2 oder 3, **dadurch gekennzeichnet, dass** die Umsetzung (i) in Gegenwart von basischen Katalysatoren (C) durchgeführt wird.

5. Verfahren nach einem der Ansprüche 1 bis 4, **dadurch gekennzeichnet, dass** als Organopolysiloxane (A) solche ausgewählt aus der Gruppe von linearen Polydiorganosiloxanen der allgemeinen Formel
HOR₂SiO(R₂SiO)ₓSiR₂OH (I)
und
R₃SiO(R₂SiO)_{y}SiR₃ (II)
und cyclischen Polydiorganosiloxanen der allgemeinen Formel
(OSiR₂)_{z} (III)
und deren Mischungen eingesetzt werden,
wobei R gleich oder verschieden sein kann und einen einwertigen gegebenenfalls halogenierten
Kohlenwasserstoffrest mit 1 bis 18 Kohlenstoffatomen bedeutet,
x 0 oder eine ganze Zahl von 1 bis 800 ist,
y 0 oder eine ganze Zahl von 1 bis 800 ist und
z eine ganze Zahl von 3 bis 12 ist.

6. Verfahren nach einem der Ansprüche 1 bis 5, **dadurch gekennzeichnet, dass** als Aminoalkylsilane (B) solche der allgemeinen Formel
XₙR(₃₋ₙ)SiZ (IV)
sowie deren Teil- oder Vollhydrolysate eingesetzt werden, wobei
R die zuvor dafür angegebene Bedeutung hat,
X eine hydrolysefähige Gruppe ausgewählt aus der Gruppe von -OR¹, -NR'₂ und -Cl ist,
R¹ einen einwertigen Alkylrest mit 1 bis 18
Kohlenstoffatomen bedeutet, der durch ein oder zwei Ethersauerstoffatome substituiert sein kann,
R' Wasserstoff oder einen einwertigen Kohlenwasserstoffrest mit 1 bis 18 Kohlenstoffatomen bedeutet,
Z einen einwertigen SiC-gebundenen, basischen. Stickstoff aufweisenden Kohlenwasserstoffrest bedeutet und
n 2 oder 3 ist.

7. Verfahren nach einem der Ansprüche 1 bis 6, **dadurch gekennzeichnet, dass** als Katalysatoren (C) solche ausgewählt aus der Gruppe von Alkalimetallhydroxiden, Alkalimetallalkoholaten, Alkalimetallsiloxanolaten und deren Mischungen eingesetzt werden.

8. Verfahren nach einem der Ansprüche 1 bis 7, **dadurch gekennzeichnet, dass** als Kettenterminierungsreagenzien (D) solche ausgewählt aus der Gruppe von Monoalkoxysilanen, Aminomonoalkoxysilanen, lineare und cyclische Silazane, Alkohole, kurzkettige lineare Diorganopolysiloxane und deren Mischungen eingesetzt werden.

9. Verfahren nach einem der Ansprüche 1 bis 8, **dadurch gekennzeichnet, dass** als Neutralisationsmittel (E) Carbonsäuren, Triorganosilylphosphate und, Triorganophosphate eingesetzt werden.

10. Verfahren nach einem der Ansprüche 1 bis 9, **dadurch gekennzeichnet, dass** das Verfahren bei einer Temperatur von 50 bis 180°C durchgeführt wird.

11. Verfahren nach einem der Ansprüche 1 bis 10, **dadurch gekennzeichnet, dass** die durchschnittliche Verweilzeit im Reaktionsraum 1 bis 180 Minuten beträgt.

## Claims

1. Process for the preparation of organopolysiloxanes having aminoalkyl groups by
(i) reaction of
(A) linear, cyclic or branched organopolysiloxanes with
(B) aminoalkylsilanes which have an SiC-bonded, basic nitrogen-containing hydrocarbon radical and 2 or 3 hydrolyzable groups,
or the partial or complete hydrolysis products thereof,
if appropriate in the presence of
(C) basic catalysts
and, if appropriate,
(D) chain-terminating reagents and
(ii) if appropriate, after the reaction (i) neutralization of the optionally used basic catalysts (C),
with the proviso that compounds (A), (B) and, if appropriate, (D) are reacted, if appropriate in the presence of catalyst (C), continuously in a reaction space whose ratio of length to diameter is equal to or greater than four.

2. Process according to Claim 1, **characterized in that** the reaction space is part of a reactor selected from the group consisting of the tubular reactors, loop reactors, kneaders and extruders.

3. Process according to Claim 1 or 2, **characterized in that** compounds (A), (B), if appropriate (C) and if appropriate (D) are passed continuously through the reaction space and the compounds (A), (B) and if appropriate (D) are reacted there, if appropriate in the presence of the catalyst (C), and the organopolysiloxanes having aminoalkyl groups which are thus obtained are removed continuously from the reaction space.

4. Process according to Claim 1, 2 or 3, **characterized in that** the reaction (i) is carried out in the presence of basic catalysts (C).

5. Process according to any of Claims 1 to 4, **characterized in that** the organopolysiloxanes (A) used are those selected from the group consisting of linear polydiorganosiloxanes of the general formula
HOR₂SiO (R₂SiO)ₓSiR₂OH (I)
and
R₃SiO(R₂SiO)_{y}SiR₃ (II)
and cyclic polydiorganosiloxanes of the general formula
(OSiR₂)_{z} (III)
and mixtures thereof,
in which R may be identical or different and is a monovalent optionally halogenated hydrocarbon radical having 1 to 18 carbon atoms,
x is 0 or an integer from 1 to 800,
y is 0 or an integer from 1 to 800 and
z is an integer from 3 to 12.

6. Process according to any of Claims 1 to 5, **characterized in that** the aminoalkylsilanes (B) used are those of the general formula
XₙR₍₃₋ₙ₎SiZ (IV)
and partial or complete hydrolysis products thereof,
in which
R has the meaning stated above therefor,
X is a hydrolyzable group selected from the group consisting of -OR¹, -NR'₂ and -Cl,
R¹ is a monovalent alkyl radical having 1 to 18 carbon atoms, which may be substituted by one or two ether oxygen atoms,
R' is hydrogen or a monovalent hydrocarbon radical having 1 to 18 carbon atoms,
Z is a monovalent SiC-bonded, basic nitrogen-containing hydrocarbon radical and
n is 2 or 3.

7. Process according to any of Claims 1 to 6, **characterized in that** the catalysts (C) used are those selected from the group consisting of alkali metal hydroxides, alkali metal alcoholates, alkali metal siloxanolates and mixtures thereof.

8. Process according to any of Claims 1 to 7, **characterized in that** the chain-terminating reagents (D) used are those selected from the group consisting of monoalkoxysilanes, aminomonoalkoxysilanes, linear and cyclic silazanes, alcohols, short-chain linear diorganopolysiloxanes and mixtures thereof.

9. Process according to any of Claims 1 to 8,
**characterized in that** carboxylic acids, triorganosilyl phosphates and triorganophosphates are used as neutralizing agents (E).

10. Process according to any of Claims 1 to 9, **characterized in that** the process is carried out at a temperature of from 50 to 180°C.

11. Process according to any of Claims 1 to 10, **characterized in that** the average residence time in the reaction space is from 1 to 180 minutes.

## Revendications

1. Procédé pour la préparation d'organopolysiloxanes comportant des groupes aminoalkyle, par
(i) mise en réaction
(A) d'organopolysiloxanes linéaires, cycliques ou ramifiés, avec
(B) des aminoalkylsilanes qui comportent un radical hydrocarboné comportant un atome d'azote basique, lié par une liaison SiC, et 2 ou 3 groupes hydrolysables,
ou de leurs hydrolysats partiels ou totaux, éventuellement en présence
(C) de catalyseurs basiques
et éventuellement
(D) de réactifs de terminaison de chaîne et
(ii) éventuellement à la suite de la réaction (i), neutralisation des catalyseurs basiques (C) éventuellement utilisés
étant entendu qu'on fait réagir les composés (A), (B) et éventuellement (D), éventuellement en présence de catalyseur (C), en continu dans une chambre de réaction dont le rapport de la longueur au diamètre est égal ou supérieur à quatre.

2. Procédé selon la revendication 1, **caractérisé en ce que** la chambre de réaction fait partie d'un réacteur choisi dans le groupe des réacteurs tubulaires, des réacteurs à boucle, des malaxeurs et des extrudeuses.

3. Procédé selon la revendication 1 ou 2, **caractérisé en ce qu'**on fait passer en continu les composés (A), (B), éventuellement (C) et éventuellement (D) dans la chambre de réaction et les composés (A), (B) et éventuellement (D) y sont mis en réaction éventuellement en présence du catalyseur (C), et les organopolysiloxanes ainsi obtenus, comportant des groupes aminoalkyle, sont évacués en continu de la chambre de réaction.

4. Procédé selon la revendication 1, 2 ou 3, **caractérisé en ce qu'**on effectue la réaction (i) en présence de catalyseurs basiques (C).

5. Procédé selon l'une quelconque des revendications 1 à 4, **caractérisé en ce qu'**on utilise comme organopolysiloxanes (A) ceux choisis dans le groupe des polydiorganosiloxanes linéaires de formules générales
HOR₂SiO(R₂SiO)ₓSiR₂OH (I)
et
R₃SiO(R₂SiO)_{y}SiR₃ (II)
et des polydiorganosiloxanes cycliques de formule générale
(OSiR₂)_{z} (III)
et des mélanges de ceux-ci,
R pouvant être le même ou différent et représentant un radical hydrocarboné monovalent, éventuellement halogéné, ayant de 1 à 18 atomes de carbone,
x est 0 ou un nombre entier allant de 1 à 800,
y est 0 ou un nombre entier allant de 1 à 800 et
z est un nombre entier allant de 3 à 12.

6. Procédé selon l'une quelconque des revendications 1 à 5, **caractérisé en ce qu'**on utilise comme aminoalkylsilanes (B) ceux de formule générale
XₙR₍₃₋ₙ₎SiZ (IV)
ainsi que leurs hydrolysats partiels ou totaux,
R ayant la signification indiquée précédemment pour ce radical,
X est un groupe hydrolysable, choisi dans l'ensemble constitué par -OR¹, -NR'₂ et -Cl,
R¹ est un radical alkyle monovalent ayant de 1 à 18 atomes de carbone, qui peut être substitué par un ou deux atomes d'oxygène en fonction éther,
R' représente un atome d'hydrogène ou un radical hydrocarboné monovalent ayant de 1 à 18 atomes de carbone,
Z représente un radical hydrocarboné monovalent, comportant un atome d'azote basique, lié par une liaison SiC, et
n est 2 ou 3.

7. Procédé selon l'une quelconque des revendications 1 à 6, **caractérisé en ce qu'**on utilise en tant que catalyseurs (C) ceux choisis dans le groupe des hydroxydes de métaux alcalins, des alcoolates de métaux alcalins, des siloxanolates de métaux alcalins et des mélanges de ceux-ci.

8. Procédé selon l'une quelconque des revendications 1 à 7, **caractérisé en ce qu'**on utilise comme réactifs de terminaison de chaîne (D) ceux choisis dans le groupe des monoalcoxysilanes, aminomono-alcoxysilanes, silazanes linéaires et cycliques, alcools, diorganopolysiloxanes linéaires à courte chaîne et des mélanges de ceux-ci.

9. Procédé selon l'une quelconque des revendications 1 à 8, **caractérisé en ce qu'**on utilise comme agent de neutralisation (E) des acides carboxyliques, des phosphates de triorganosilyle et des triorganophosphates.

10. Procédé selon l'une quelconque des revendications 1 à 9, **caractérisé en ce qu'**on effectue le procédé à une température de 50 à 180 °C.

11. Procédé selon l'une quelconque des revendications 1 à 10, **caractérisé en ce que** le temps de séjour moyen dans la chambre de réaction va de 1 à 180 minutes.
